(19) Europäisches Patentamt
European Patent Office
Office européen des brevets

(11) **EP 2 373 109 B1**

(12) **EUROPEAN PATENT SPECIFICATION**

(45) Date of publication and mention
of the grant of the patent:
**18.04.2018 Bulletin 2018/16**

(21) Application number: **09836068.8**

(22) Date of filing: **30.12.2009**

(51) Int Cl.:
***H04W 72/10*** (2009.01)

(86) International application number:
**PCT/CN2009/076224**

(87) International publication number:
**WO 2010/075781 (08.07.2010 Gazette 2010/27)**

(54) **INTERFERENCE COORDINATION METHOD AND ACCESS NETWORK DEVICE**

INTERFERENZKOORDINATIONSVERFAHREN UND ZUGANGSNETZGERÄT

PROCÉDÉ DE COORDINATION D'INTERFÉRENCE ET DISPOSITIF DE RÉSEAU D'ACCÈS

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **30.12.2008 CN 200810247578**

(43) Date of publication of application:
**05.10.2011 Bulletin 2011/40**

(73) Proprietor: **China Academy of Telecommunications Technology Haidian District, Beijing 100191 (CN)**

(72) Inventors:
• **QIN, Fei**
**Beijing 100083 (CN)**
• **ZHAO, Jinbo**
**Beijing 100083 (CN)**
• **ZHU, Zhiqiu**
**Beijing 100083 (CN)**

(74) Representative: **Maiwald Patentanwalts GmbH Elisenhof Elisenstrasse 3 80335 München (DE)**

(56) References cited:
**EP-A1- 1 182 898         EP-A1- 1 453 337**
**WO-A2-2005/101987         WO-A2-2008/130922**
**CN-A- 1 953 349         US-A1- 2005 282 550**
**US-A1- 2008 056 187**

**Description**

**FIELD OF THE PRESENT INVENTION**

The present invention relates generally to the field of communication technology, and more particularly relates to a method and an access network device for interference coordination.

**BACKGROUND OF THE PRESENT INVENTION**

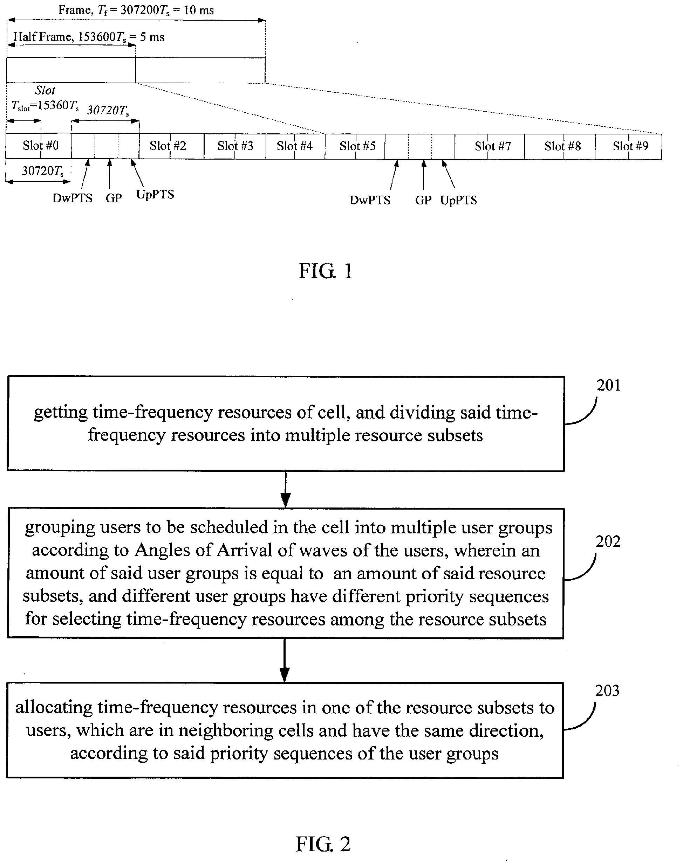

In a Long Term Evolution (LTE) system, an Orthogonal Frequency Division Multiplexing (OFDM) technology is used. A LTE Time-Division-Duplexing (LTE-TDD) system is taken as an example, its frame structure is shown in FIG. 1. A basic resource unit that may be scheduled by the LTE system is a Physical Resource Block (PRB), and each PRB includes a 12* 15KHz bandwidth and a 1ms time slot unit (subframe). In a time domain of the system, each frame is divided into two half-frames, each half-frame may be divided into five subframes. In a frequency domain of the system, a bandwidth of the system could be divided into 50 PRBs or 100 PRBs etc in view of different bandwidths of different systems.

In case that a co-frequency networking is implemented, interference from neighbor cells is a main interference source. Interference suppression and interference coordination techniques are needed to reduce co-frequency interference and improve a spectral efficiency of the system.

An multi-antenna shaping technique could effectively inhibit the co-frequency interference from neighbor cells. The multi-antenna shaping technology improves intensity of useful signals from a user's direction and inhibits interference power from other directions by means of spatial beams. Thus, a receiving signal-to-noise ratio of the useful signals is increased. However, the interference suppression by this means is random. When locations of users scheduled on the same frequency band in neighbor cells and in a home cell are close to each other, strong interference may be generated.

An interference coordination technique is widely used in the LTE system. This technique generally includes a static fractional frequency reuse technique and a semi-static interference coordination technique.

A principle of the static fractional frequency reuse technique is described as follow: each cell-edge user may only use a part of entire available frequency bands, and frenquency resources used by cell-edge users in adjacent cells are mutually orthogonal; on an edge of each cell, signals in available frequency bands may be sent with high powers to improve edge performance; in the interior of the cell, the entity of available frenquency resources may be used; in order to reduce interference to neighbor cells, if frequency bands used at edges of neighbor cells are to be used inside a home cell, maximum transmitting powers at these frequency bands should be restricted.

The semi-static interference coordination technique semi-statically adjusts resource subsets allocated to the cell-edge users by interacting resource usage information through an X2 interface (a communication interface between eNBs). Each cell obtains the resource usage information by estimating resource requirements of cell-edge users in the cell, detecting interference at each frequency band and so on, and interchange the resource usage information through the X2 interface, so as to achieve coordination between the cells and thus to reduce interference among the cells.

In current methods for interference coordination, users scheduled on the same subband in the home cell and the neighbor cells are completely random, which may cause the follow problems:

1) channel quality of a user will vary as locations of users scheduled on the same frequency band in the neighbor cells change, so channel interference is possible to be strong; and
2) the channel quality of a user will vary as the locations of the users scheduled on the same frequency band in the neighbor cells change, so when an Adaptive Modulation and Coding (AMC) technique is used, it's difficult to accurately forecast the channel quality, thus increasing a Block Error Rate (BLER).

European patent application EP 1453337 A1 discloses a radio resource

management method in cellular telephone networks based on interference reduction timeslot allocation. The method dislcosed in the European application only allocates availabe timeslots to sectors which don't overlap the sectors of adjacent or superimposed cells during a same active timeslot, and a suitable configuration table is generated by mapping a subset of possible allocations between cells, sectionrs and timeslots. Staring from selection of an initial configuration in the table, suitable spatial functions are generated to define configurations of all adjacent elements, in order to achieve maximum interference rejection.

WO 2005/101987 A2 discloses a method of allocating subcarriers in plurality of cells using Orthogonal Frequency Division Multiplexing (OFDM). The therein described method includes: allocating the subcarriers of the system to subcarrier groups for each cell; assigning priorities to the subcarriers groups in each cell; and allocating independently in each cell the subcarrier groups in an order to minimize inter-cell interferences of each cell with at least one neighboring cell.

## SUMMARY OF THE PRESENT INVENTION

The object of the present invention is achieved by the features of the appended independent claims.

## BRIEF DESCRIPTION OF THE DRAWINGS

Figure 1 is a schematic diagram of a frame structure of a LTE-TDD system in prior art;
Figure 2 is a flow diagram of a method for interference coordination of an embodiment of the present invention;
Figure 3 is a schematic diagram of grouping users based on a four-color theorem in an embodiment of the present invention;
Figure 4 is a schematic diagram of a type of division to resource subsets in an embodiment of the present invention; and
Figure 5 is a structural schematic diagram of an access network device of an embodiment of the present invention.

## DETAILED DESCRIPTION OF THE EMBODIMENTS OF THE PRESENT INVENTION

To make those skilled in the art better understand technical solutions of embodiments of the present invention, the embodiments of the present invention will be further described in detail in combination with drawings and examples hereinafter.

The embodiments of the present invention provide a method and an access network device for interference coordination, which include: getting time-frequency resources of a cell, and dividing said time-frequency resources into multiple resource subsets; grouping users to be scheduled in the cell into multiple user groups according to Angles of Arrival (AOA) of waves of the users, wherein an amount of said user groups is equal to an amount of said resource subsets, and different user groups have different priority sequences for selecting time-frequency resources among the resource subsets; and allocating time-frequency resources in one of the resource subsets to users, which are in neighbor cells and have the same AOA, according to said priority sequences of the user groups. Therefore, users in a home cell and neighbor cells with the same AOA preferentially use mutually orthogonal time-frequency resources, so that co-frequency interference among cells may be reduced.

Figure 2 is a flow diagram of a method for interference coordination of an embodiment of the present invention. The method mainly includes the following steps 201-203.

Step 201: getting time-frequency resources of a cell, and dividing said time-frequency resources into multiple resource subsets.

When dividing the time-frequency resources, for downlink time-frequency resources, the downlink time-frequency resources are divided by using one or more continuous Physical Resource Blocks (PRBs) as a minimum unit; and for uplink time-frequency resources, continuous time-frequency resources are divided according to a principle of mutually orthogonality.

Specifically, an amount of time-frequency resources in each resource subset may be statically configured, or an appropriate amount of time-frequency resources may be assigned to each resource subset according to a number of users and an amount of service requirements in each group. Simply, the amount of time-frequency resources in each resource subset may be assigned according to a principle that the amount of time-frequency resources is proportional to the number of users or the amount of service requirements. The time-frequency resources in each resource subset may be continuous or discontinuous.

Step 202, grouping users to be scheduled in the cell into multiple user groups according to Angles of Arrival (AOA) of waves of the users, wherein an amount of said user groups is equal to an amount of said resource subsets, and different user groups have different priority sequences for selecting time-frequency resources among the resource subsets.

Specifically, an angle space for receiving signals may be divided into multiple mutually orthogonal angle subspaces according to the AOAs of waves, wherein each of the angle subspaces corresponds to one of the user groups, and the user group which a user belongs to is determined according to the angle subspace which said user belongs to.

When allocating the time-frequency resources, users in different user groups correspond to different priority sequences for selecting time-frequency resources among the resource subsets. For example, the priority sequences for selecting time-frequency resources among the resource subsets corresponding to user group 1 to user group N are shown respectively as follow:

User group 1: resource subset 1-> resource subset 2-> resource subset 3...resource subset N;
User group 2: resource subset 2-> resource subset 3...resource subset N->resource subset 1;

... ...

User group N: resource subset N-> resource subset 1-> resource subset 2-> resource subset 3....

In practice, the amount of user groups in each cell and the priority sequence for selecting time-frequency resources among the resource subsets corresponding to each user group may be determined according to a location of the cell when initially planning the network, to ensure that different user groups with the same AOA preferentially use time-frequency resources in different resource subsets.

In order to coordinate resources and adapt to changes in distribution of services and users in a better way, after grouping users is completed, an eNB in the home cell sends to neighbor cells its information on user groups , information on resource subsets, and the priority sequences for selecting time-frequency resources among the resource subsets corresponding to the user groups, wherein said information on user groups includes AOAs of users, and the priority sequences corresponding to the user groups may be represented by numbers of the resource subsets. In the LTE system, these information may be transmitted through an X2 interface between eNBs. After a cell receives these information from neighbor cells, it may adjust the resource subsets in the cell and the priority sequences corresponding to user groups in the cell based on a principle that time-frequency resources used by the user groups with the same AOA are not conflict.

Of course, the information on user groups , the information on resource subsets, and the priority sequences corresponding to the user groups may also be configured into eNBs in the neighbor cells when initially planning the network. When any one of the information on user groups , the information on resource subsets, and the priority sequences corresponding to the user groups in the cell is changed, the changed information may be sent to the neighbor cells. After a cell receives the changed information from the neighbor cells, it could adjust resource subsets in the cell and the priority sequences corresponding to the user groups in the cell based on the principle that time-frequency resources used by user groups with the same AOA are not conflict.

Step 203, allocating time-frequency resources in one of the resource subsets to users, which are in neighbor cells and have the same AOA, according to said priority sequences of the user groups.

For example, a mapping relation between each of the user groups and its respective priority sequence for selecting time-frequency resources among the resource subsets may be established in advance. Specifically, the mapping relation between each of the user groups and its respective priority sequence may be established according to the following principle: for one of the user groups, selects one of the resource subsets with the highest priority in the priority sequence for selecting time-frequency resources among the resource subsets, wherein the resource subsets with the highest priority in the priority sequences corresponding to different user groups are different.

In this way, when each cell schedules each subframe, it allocates time-frequency resources to each user according to a user group that the user belongs to and said mapping relation.

Generally, cell-edge users are more obviously affected by interference from neighbor cells, but cell-center users are not obviously by the interference from neighbor cells. Therefore, in specific applications, the grouping may be only performed to the cell-edge users. Correspondingly, the dividing time-frequency resources may be done to only a part of the entire time-frequency resources in the system. In this way, when establishing the mapping relation between each user group and its respective priority sequence, the following principle may be relied on: for one of the user groups, selecting one of the resource subsets with the highest priority in the priority sequence, wherein the resource subsets with the highest priority in the priority sequences corresponding to different user groups are different; and setting that the cell-center users in the cell have the lowest priority to the resource subset with the highest priority.

Based on the four-color theorem, generally, four resource subsets may basically ensure that different time-frequency resources are allocated to users with the same AOA in different cells. In the embodiments of the present invention, users at geographically neighboring locations in any neighbor cells belong to different user groups. Thus, by allocating time-frequency resources to users to be scheduled according to the mapping relation between each user group and its respective priority sequence, it may ensure that different time-frequency resources are allocated to the users in the neighbor cells with the same AOA. Because the LTE system is provided with 50-100 PRB resources which also may be further divided, the method according to the embodiments of the present invention may reduce the co-frequency interference among cells effectively.

The process of allocating time-frequency resources in the embodiments of the present invention will be further illustrated by following examples.

Example 1: grouping all users in a cell.

Assuming a three-sector LTE-TDD system with a 20MHz bandwidth, the allocation is done to the downlink time-frequency resources, and the amount of the user groups and the resource subsets is N=4.

(1) all users in the cell is firstly grouped into four user groups, i.e., $U_0$, $U_1$, $U_2$, $U_3$.

Azimuth information of a user may be defined by the Angle of Arrival (AOA) of waves of the user measured at the eNB, wherein the AOA is defined as an estimated angle of the user relative to a reference direction. AOA information may be got by a spectrum estimation method (such as a MUSIC spectrum estimation, an ESPRIT algorithm, etc). Taking the MUSIC spectrum estimation as an example, the AOA information may be obtained in the following manner: firstly, a sampled value sequence of signals containing the AOA information is obtained, and a correlation matrix is constructed; then, an eigenvalue-decomposition is performed to the correlation matrix, and an amount of the signals is estimated by using a multiplicity of minimal eigenvalues; finally, a MUSIC spectrum is computed and a cost function is constructed, and a direction corresponding to a peak value of the cost function is a wave direction of the signals, i.e., the AOA of the signals.

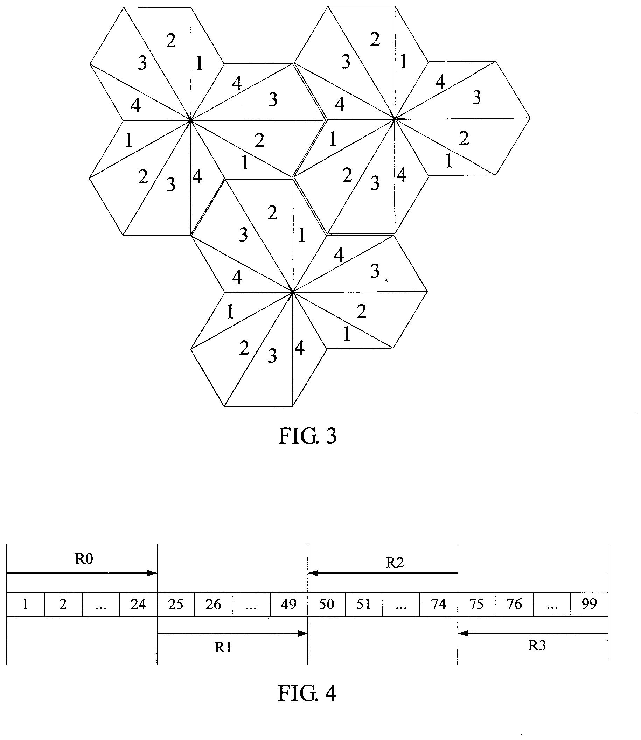

Grouping users in the downlink may be done by using the above method based on the four color theorem shown in FIG.3, in a granularity of $\dfrac{\pi}{6}$. Specifically, in the three-sector system, assuming that a value range of AOA for a sector 0 is $\left[ -\dfrac{\pi}{3}, \dfrac{\pi}{3} \right)$, a value range of AOA for a sector 1 is $\left[ \dfrac{\pi}{3}, \pi \right)$, and a value range of AOA for a sector 2 is $\left[ \pi, \dfrac{5\pi}{3} \right)$.

For a user in the sector 0: if the AOA of a user j satisfies $AOA_j \in \left[ -\dfrac{\pi}{3}, -\dfrac{\pi}{6} \right)$, then j $\in$ $U_0$; if the AOA of the user j satisfies $AOA_j \in \left[ -\dfrac{\pi}{6}, 0 \right)$, then j $\in$ $U_1$; if the AOA of the user j satisfies $AOA_j \in \left[ 0, \dfrac{\pi}{6} \right)$, then j $\in$ $U_2$; if the AOA of the user j satisfies $AOA_j \in \left[ \dfrac{\pi}{6}, \dfrac{\pi}{3} \right)$, then j $\in$ $U_3$.

For a user in the sector 1: if the AOA of a user j satisfies $AOA_j \in \left[ \dfrac{\pi}{3}, \dfrac{\pi}{2} \right)$, then j $\in$ $U_0$; if the AOA of the user j satisfies $AOA_j \in \left[ \dfrac{\pi}{2}, \dfrac{2\pi}{3} \right)$, then j $\in$ $U_1$; if the AOA of the user j satisfies $AOA_j \in \left[ \dfrac{2\pi}{3}, \dfrac{5\pi}{6} \right)$, then j $\in$ $U_2$; if the AOA of the user j satisfies $AOA_j \in \left[ \dfrac{5\pi}{6}, \pi \right)$, then j $\in$ $U_3$.

For a user in the sector 2: if the AOA of a user j satisfies $AOA_j \in \left[ \pi, \dfrac{7\pi}{6} \right)$, then j $\in$ $U_0$; if the AOA of the user j satisfies $AOA_j \in \left[ \dfrac{7\pi}{6}, \dfrac{4\pi}{3} \right)$, then j $\in$ $U_1$; if the AOA of the user j satisfies $AOA_j \in \left[ \dfrac{4\pi}{3}, \dfrac{3\pi}{2} \right)$, then j $\in$ $U_2$; if the AOA of the user j satisfies $AOA_j \in \left[ \dfrac{3\pi}{2}, \dfrac{5\pi}{3} \right)$, then j $\in$ $U_3$.

(2) The time-frequency resources are divided into four resource subsets, and time-frequency resources in each resource subset may be continuous or discontinuous.

Resource subset division needs to determine a minimum unit for dividing the time-frequency resources. In the present embodiment, a subframe configuration 0 (references 3GPP TS 36.221, V8.0.0) may be used to perform the resource subset division, a size of a Resource Block group (RB group) is p=4 under a 20MHz bandwidth. Thus, four PRBs are taken as the minimum unit for dividing the time-frequency resources in the resource subsets.

Specifically, a total amount of PRBs available in the system is denoted as PRBNum; a PRB with number i (0≤i<PRB-Num) is written as $PRB_i$, the size of the RB group is p, an amount of resource subsets is N=4, and a resource subset

k is $R_k$ ($0 \le k < N$). Then, a resource subset that the $PRB_i$ belongs to is shown as follow.

As for cases of $0 \le i < \left\lfloor \dfrac{PRBNum}{N \cdot p} \right\rfloor \cdot N \cdot p$ and $\left\lfloor \dfrac{PRBNum}{N \cdot p} \right\rfloor \cdot N \cdot p \le i < \left\lfloor \dfrac{PRBNum}{p} \right\rfloor \cdot p$ :

If $k \cdot p \le i$ mod $N \cdot p < (k+1) \cdot p$, then the $PRB_i$ belongs to the resource subset k;

If $\left\lfloor \dfrac{PRBNum}{p} \right\rfloor \cdot p \le i < PRBNum$, then the $PRB_i$ belongs to a same resource subset which a PRB with

number $\left\lfloor \dfrac{PRBNum}{p} \right\rfloor \cdot p - 1$ belongs to.

For a system having a bandwidth of 20MHz, if the PRBNum=100, the p=4, then resource subsets that users in a cell may use are shown as follow:

$$R_0 = \left\{ \begin{array}{l} 0,1,2,3,16,17,18,19,32,33,34,35,48,49,50,51, \\ 64,65,66,67,80,81,82,83,96,97,98,99 \end{array} \right\};$$

$$R_1 = \left\{ \begin{array}{l} 4,5,6,7,20,21,22,23,36,37,38,39,52,53,54,55, \\ 68,69,70,71,84,85,86,87 \end{array} \right\};$$

$$R_2 = \left\{ \begin{array}{l} 8,9,10,11,24,25,26,27,40,41,42,43,56,57,58,59, \\ 72,73,74,75,88,89,90,91 \end{array} \right\};$$

and

$$R_3 = \left\{ \begin{array}{l} 12,13,14,15,28,29,30,31,44,45,46,47,60,61,62,63, \\ 76,77,78,79,92,93,94,95 \end{array} \right\}.$$

(3) The mapping relation between each user group and its respective resource subset is established.

For users whose AOAs belong to $U_k$, the priority sequence for selecting time-frequency resources among the resource subsets is: $R_k$-> $R_{k+1}$-> ...-> $R_{N-1}$-> $R_0$-> ...$R_{k-1}$.

Specifically, in the present embodiment:

for users whose AOAs belong to $U_0$, the priority sequence for selecting is $R_0$-> $R_1$-> $R_2$-> $R_3$;
for users whose AOAs belong to $U_1$, the priority sequence for selecting is $R_1$-> $R_2$-> $R_3$-> $R_0$;
for users whose AOAs belong to $U_2$, the priority sequence for selecting is $R_2$-> $R_3$-> $R_0$-> $R_1$; and
for users whose AOAs belong to $U_3$, the priority sequence for selecting is $R_3$-> $R_0$-> $R_1$-> $R_2$.

Thus, when each subframe is scheduled in a cell, time-frequency resources allocated for a user may be determined according to the user group which the user belongs to, and the above-mentioned mapping relation.

Example 2: grouping cell-edge users.

Assuming a case that in a three-sector LTE-TDD system having a bandwidth of 20MHz, an allocation is made to uplink time-frequency resources, and the amount of the user groups and the resource subsets is N=4.

(1) User grouping

Grouping users in the uplink relates to two aspects, i.e., differentiating cell-center users from cell-edge users, and grouping the cell-edge users.

Many methods may be used to differentiate the cell-center users from the cell-edge users. For example, the cell-center users and the cell-edge users may be differentiated from each other according to a Reference Signal Receiving Power (RSRP), a Pilot Signal Strength, a reference signal receiving quality, a pilot signal Channel Quality Indicator (CQI), or may also be differentiated according to a measured path loss information or a Signal to Interference plus Noise Ratio (SINR) information of users in the cell.

Specifically, if the cell-center users and the cell-edge users are to be differentiated according to the RSRP, such differentiation may be done based on difference values between the RSRPs of neighbor cells and the RSRP of the home cell.

1. The eNB configures a measure to instruct a User Equipment (UE) to measure the RSRPs of the neighbor cells and the RSRP of the home cell. If the difference value obtained by subtracting the RSRP of the home cell from the RSRP of one of the neighbor cells is larger than a certain threshold TH1 (the TH1 may be in a range of -2dB to -5dB), and a trigger condition is satisfied, then the UE reports the measurement to the eNB. After the eNB receives the measurement, the eNB may determine that the UE is on a cell edge. If all difference values obtained by subtracting the RSRP of the home cell from the RSRPs of the neighbor cells are smaller than another certain threshold TH2 (TH1>TH2), and another trigger condition is satisfied, then the UE reports the measurement to the eNB. After the eNB receives the measurement, the eNB may determine that the UE is at the cell center.

2. The measurement reported by the UE includes difference values between the home cell and three of the neighbor cells. Certain time intervals exist among the obtained difference values. The eNB may determine a location information of the UE according to the measurement. For example, if the continuous three difference values of the RSRPs reported by the UE are -7, -3, and 1, then it may be determined that the UE has moved from the cell center to the cell edge.

The same method as indicated in Example 1 may be applied to group cell-edge users in the uplink based on the Angles of Arrival (AOA) of waves of the users.

(2) Dividing resources

For a system of a 20MHz bandwidth, time-frequency resources used for the cell-edge users may be divided into four resource subsets. Time-frequency resources in each resource subset is continuous.

Assuming a case that the number of available time-frequency resources in the system is 100, then the number of time-frequency resources available to each resource subset may be 25.

Specifically, as shown in FIG.4, resource subset 0 may comprise time-frequency resources with number 0~24, wherein a time-frequency resource with a smaller number has a higher usage priority; resource subset 1 may comprise time-frequency resources with number 25~49, wherein a time-frequency resource with a smaller number has a higher usage priority; resource subset 2 may comprise time-frequency resources with number 50~74, wherein a time-frequency resource with a larger number has a higher usage priority; and resource subset 3 may comprise time-frequency resources with number 75~99, wherein a time-frequency resource with a larger number has a higher usage priority.

(3) Establishing a mapping relation between each user group and its respective resource subset.

For a user whose AOA belongs to $U_k$ (the resource subset K ($0 \le k < N$)), if the user is a cell-edge user, then the priority sequence for the cell-edge user is $R_k\text{-}> R_{k+1}\text{-}> ...\text{-}> R_{N-1}\text{-}> R_0\text{-}> ...R_{k-1}$; if the user is a cell-center user, then the priority sequence for the cell-center user is:

$$R_{k+1+\lfloor N/2 \rfloor} - > ... - > R_{N-1} - > R_0 - > ... - > R_{k-1} - > R_{k+\lfloor N/2 \rfloor} - > ... - > R_k .$$

Specifically, in the present embodiment, the priority sequence for a cell-edge user whose AOA belongs to $U_0$ is $R_0\text{-}> R_1\text{-}> R_2\text{-}> R_3$, and the priority sequence for a cell-center user whose AOA belongs to $U_0$ is $R_2\text{-}> R_3\text{-}> R_1\text{-}> R_0$.

The priority sequence for a cell-edge user whose AOA belongs to $U_1$ is $R_1\text{-}> R_2\text{-}> R_3\text{-}> R_0$, and the priority sequence for a cell-center user whose AOA belongs to $U_1$ is $R_2\text{-}> R_3\text{-}> R_0\text{-}> R_1$.

The priority sequence for a cell-edge user whose AOA belongs to $U_2$ is $R_2\text{-}> R_3\text{-}> R_0\text{-}> R_1$, and the priority

sequence for a cell-center user whose AOA belongs to $U_2$ is $R_0$-> $R_1$-> $R_3$-> $R_2$.

The priority sequence for a cell-edge user whose AOA belongs to $U_3$ is $R_3$-> $R_0$-> $R_1$-> $R_2$, and the priority sequence for a cell-center user whose AOA belongs to $U_3$ is $R_1$-> $R_2$-> $R_0$-> $R_3$.

The method for interference coordination of the embodiments of the present invention is not only applicable to the LTE-TDD system, but also applicable to any system that may schedule resources in a time domain and in a frequency domain separately and is affected by directional interference. The method may ensure that mutually orthogonal time-frequency resources are allocated to cell-edge users in the neighbor cells and in the home cell with the same AOA, thus may reduce a probability that the cell-edge users in the neighbor cells and the home cell use the same time-frequency resources, reduce co-frequency interference among the cells, and improve channel quality.

Furthermore, by combining with a schedule strategy, the method may further achieve a spatial diversity gain and improve a system capacity. Specifically, the system may select and pair users in two or more user groups having a better space isolation, and schedule the same time-frequency resources to the paired users. Each of the paired users may be distinguished only by spatial information.

In the method for interference coordination of the embodiments of the present invention, in order to more flexibly adapt to diversity of services, loads, and resource amounts required by cell-edge users in different cells, and take account of complexity and load of the X2 interface, the system may adjust an information on user groups and/or resource subsets semi-statically. In a system based on a multi-antenna shaping technique, besides the commonly-used load information, such as High Interference Indicator (HII), Overload Indicator (OI), Relative Narrowband Tx Power (RNTP), etc, angle information of users and information on resource subsets, etc may also be added. After the neighbor cells have received relevant information from the home cell, the neighbor cells will make decisions to perform an adjustment correspondingly, and sends a result of the adjustment to adjacent cells through the X2 interfaces.

In the embodiments of the present invention, the user groups and/or the resource subsets may be adjusted dynamically according to an AOA distribution of the cell-edge users and a service load distribution of the cell-edge user groups, etc. For example, after making a statistics in a long period, if it is found that an amount of cell-edge users whose AOAs belong to $U_0$ is relatively large, but an amount of cell-edge users whose AOAs belong to $U_1$ is relatively small, then the configuration of resource subsets allocated to the cell-edge users may be adjusted. For example, the result of the adjustment by a certain cell is that the resource subset allocated to the $U_0$ includes time-frequency resources with number 0~29, and the resource subset allocated to the $U_1$ includes time-frequency resources with number 30~49. Then, the result of such adjustment is sent to neighbor cells through the X2 interfaces, and thereafter, according to the result of such adjustment, the neighbor cells perform an adjustment that is beneficial to both the home cell and the neighbor cells. If the same condition exists in the neighbor cells, then the neighbor cells may perform a similar adjustment. Otherwise, if the neighbor cells did not perform any adjustment, the home cell may adjust a usage priority of time-frequency resources in the R1 in which time-frequency resources with smaller numbers are used preferentially, to be a usage priority in which time-frequency resources with larger numbers are used preferentially. The home cell may communicate the result of such adjustment to the neighbor cells through the X2 interfaces, and after several times of adjustments, an equilibrium state in which a cost function of each of adjacent sectors has a minimum value.

Those skilled in the art may understand that all or a part of the steps of the method in the above embodiments may be achieved by using programs to instruct relevant hardware, wherein said programs may be stored in computer readable storage medium such as ROM/RAM, disk, CD-ROM, etc.

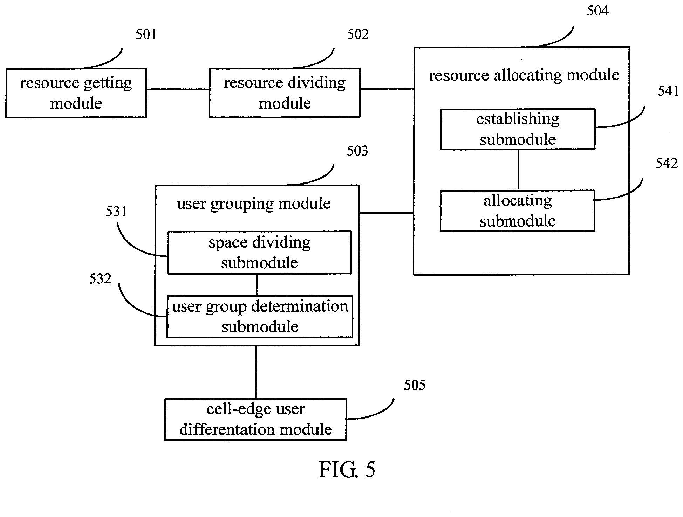

An access network device is further provided in the embodiments of the present invention. FIG.5 is a structural schematic diagram of the access network device. The access network device includes: a resource getting module 501, a resource dividing module 502, a user grouping module 503, and a resource allocating module 504. The resource getting module 501 is used to get time-frequency resources in a cell; the resource dividing module 502 is used to divide said time-frequency resources into multiple resource subsets; the user grouping module 503 is used to group users to be scheduled in the cell into multiple user groups according to AOAs of waves of the users, wherein an amount of said user groups is equal to an amount (generally 3 or 4) of said resource subsets, and different user groups have different priority sequences for selecting time-frequency resource among the resource subsets; and the resource allocating module 504 is used to allocate time-frequency resources in one of the resource subset to users, which are in neighbor cells and have the same AOA, according to said priority sequences of the user groups.

Specifically, when the resource dividing module 502 divides the time-frequency resources, for downlink time-frequency resources, it may divide the downlink time-frequency resources by using one or more continuous PRB as a minimum unit; and for uplink time-frequency resources, it may perform resource subset division to continuous time-frequency resources according to a principle of mutual orthogonality. Certainly, the embodiments of the present invention are not limited to this mode for resource subset division.

The user grouping module 503 needs to group users in the cell according to locations of the users. In specific implementation, the user grouping module 503 may include a space dividing submodule 531 and a user group determination submodule 532. The space dividing submodule 53 is used to divide an angle space for receiving signals into multiple mutually orthogonal angle subspaces according to the AOAs of waves, wherein each angle subspace corresponds to one of the user groups; and the user group determination submodule 532 is used to determine which of the user groups a user belongs to, according to the angle subspace that said user belongs to.

The resource allocating module 504 is required to allocate time-frequency resources in the one of the resource subsets to users with the same AOA in neighbor cells, according to said priority sequence corresponding to the user group. In specific implementation, the resource allocating module 504 may include an establishing submodule 541 and an allocating submodule 542.

The establishing submodule 541 is used to establish a mapping relation between each of the user groups and its respective priority sequence for selecting time-frequency resources among the resource subsets. When establishing the mapping relation between each user group and its respective priority sequence, the following principle may be taken: for one of the user groups, selecting one of the resource subsets with the highest priority in the priority sequence for selecting time-frequency resources among the resource subsets, the resource subsets with the highest priority in the priority sequences corresponding to different user groups are different.

The allocating submodule 542 is used to allocate time-frequency resources to each user according to the one of the user groups that the user belongs to and according to said mapping relation, when scheduling each subframe.

Certainly, a structure of said resource allocating module 504 is not limited to the above form, and it may also be in other forms.

In order to more flexibly adapt to the diversity of services, loads, and resource amounts required by cell-edge users in different cells, the access network device of the embodiments of the present invention may further include a communication module and an updating module (not shown). Said communication module is used to send an update information to the neighbor cells, when any of the information on user groups, the information on resource subsets, and the mapping relation between each of the user groups and its respective priority sequence is changed; and said updating module is used to adjust any one or more of the information on user groups of the home cell, the information on resource subsets of the home cell, and the mapping relation between each of the user groups and its respective priority sequence, according to said update information, after receiving the update information from the neighbor cells.

Cell-edge users are more obviously affected by interference from neighbor cells, but cell-center users are not obviously by the interference from the neighbor cells. Therefore, in specific applications, the grouping may be only performed to the cell-edge users. Correspondingly, the dividing time-frequency resources may be done to only a part of the time-frequency resources in the system. In this way, users with the same AOA in the neighbor cells may be ensured to preferentially use different time-frequency resources as well.

For this reason, the access network device of the embodiments of the present invention may further include a cell-edge user differentiation module 505, which is used to differentiating cell-center users from cell-edge users, according to the Reference Signal Receiving Power, or the Pilot Signal Strength, or the Reference Signal Receiving quality, or the Pilot Signal Channel Quality Indicator (CQI), or a detected path loss information, or a Signal to Interference plus Noise Ration (SINR) information of each user in said cell.

In this case, said user grouping module 503 only groups the cell-edge users differentiated by the cell-edge user differentiation module 505. Correspondingly, the resource getting module 501 may only get a part of the time-frequency resources in the cell; or the resource getting module 501 gets all of the time-frequency resources in the cell, and the resource dividing module 502 selects a part of the time-frequency resources to perform the division. In practice, this may be flexibly set.

The access network device of the embodiments of the present invention may reduce a probability that the cell-edge users in the neighbor cells and in the home cell with the same AOA use the same time-frequency resources by allocating mutually orthogonal time-frequency resources to the cell-edge users, and may reduce co-frequency interference among the cells and improve channel quality.

The embodiments of the present invention are detailed above. The present invention is illustrated by specific embodiments. The illustration of the above embodiments is only used to help to understand the method and the device of the present invention. Meanwhile, for those skilled in the art, the specific embodiments and an application scope may be various. Therefore, contents of the present description should not be understood as limitation to the present invention.

**Claims**

1.  A method for interference coordination, the method comprising:

    getting (201) time-frequency resource-blocks of a cell, and dividing said time-frequency resource-blocks into multiple resource subsets;
    grouping (202) users to be scheduled in the cell into multiple user groups according to Angles of Arrival AOA ranges of the users,
    wherein an amount of said user groups is equal to an amount of said resource subsets, and different user groups have different priority sequences for selecting time-frequency resource-blocks among the resource subsets; obtaining information on resource subsets, information on user groups, said user group information comprises AOA ranges, and information on selection priority sequences corresponding to each user group of the neighbor cells; and

allocating (203) time-frequency resource-blocks of the resource subsets to users, such that users which are in neighbor locations belong to different user groups, and the allocation is scheduled according to said priority sequences of the user groups.

2. The method of claim 1, wherein, said dividing said time-frequency resource-blocks into multiple resource subsets, comprising:

for downlink time-frequency resource-blocks, dividing the downlink time-frequency resource-blocks by using one or more continuous Physical Resource Blocks PRB as a minimum unit; and
for uplink time-frequency resource-blocks, dividing continuous time-frequency resource-blocks according to a principle of mutual orthogonality.

3. The method of claim 1, wherein, said grouping users to be scheduled in the cell into multiple user groups according to Angles of Arrival AOA ranges of the users, comprising:

dividing an angle space for receiving signals into multiple mutually orthogonal angle subspaces according to the AOA ranges, wherein each of the angle subspaces corresponds to one of the user groups; and
determining a user group which a user belongs to, according to the angle subspace which said user belongs to.

4. The method of claim 1, wherein, said allocating the time-frequency resource-blocks of the resource subsets to users, such that users which are in neighbor locations belong to different groups and the allocation is scheduled according to said priority sequences of the user groups, comprising:

establishing a mapping relation between each of the user groups and its respective priority sequence for selecting time-frequency resource-blocks among the resource subsets in advance; and
allocating the time-frequency resource-blocks to each user according to a user group that the user belongs to and said mapping relation, when each cell schedules each subframe.

5. The method of claim 4, wherein, establishing a mapping relation between each of the user groups and its respective priority sequence for selecting time-frequency resource-blocks among the resource subsets is performed according to the following principle:

for one of user groups, selecting one of the resource subsets with the highest priority in the priority sequence for selecting time-frequency resource-blocks among the resource subsets, wherein the resource subsets with the highest priority in the priority sequences corresponding to different user groups are different.

6. The method of any of claim 1-5, further comprising:

when any of information on user groups in a home cell, information on resource subsets in a home cell, and the mapping relation between each of the user groups and its respective priority sequence for selecting time-frequency resource-blocks among the resource subsets is changed, sending an update information to neighbor cells; and
after receiving the update information of neighbor cells, according to said update information, adjusting any one or more of the information on user groups in the home cell, the information of resource subsets in the home cell, and the mapping relation between each of the user groups and its respective priority sequence.

7. The method of claim 1, wherein, said time-frequency resource-blocks are a part of entire time-frequency resource-blocks of said cell, and said users to be scheduled are cell-edge users of said cell; said method further comprising:

according to Reference Signal Receiving Power, or Pilot Signal Strength, or Reference Signal Receiving Quality, or pilot signal Channel Quality Indicator CQI, or detected path loss information, or Signal to Interference plus Noise Ratio SINR information of each user in said cell, differentiating cell-center users from cell-edge users.

8. An access network device comprising:

resource getting module (501) configured to get time-frequency resource-blocks of a cell;

resource dividing module (502) configured to divide said time-frequency resource-blocks into multiple resource subsets;

user grouping module (503) configured to group users to be scheduled in the cell into multiple user groups according to Angles Of Arrival AOA ranges of the users, wherein an amount of said user groups is equal to an amount of said resource subsets, and different user groups have different priority sequences for selecting time-frequency resource-blocks among the resource subsets;

updating module configured to obtain information on resource subsets, information on user groups, said user group information comprises AOA ranges, and information on selection priority sequences corresponding to each user group of the neighbor cells; and

resource allocating module (504) configured to allocate time-frequency resource-blocks of the resource subsets to users, such that users which are in neighbor locations belong to different user groups, and the allocation is scheduled according to said priority sequences of the user groups.

9. The device of claim 8, wherein, said resource grouping module is specifically used for:

for downlink time-frequency resource-blocks, dividing the downlink time-frequency resource-blocks by using one or more continuous Physical Resource Blocks PRB as a minimum unit; and

for uplink time-frequency resource-blocks, dividing continuous time-frequency resource-blocks according to a principle of mutual orthogonality.

10. The device of claim 8, wherein, said user grouping module comprising:

space dividing submodule (531) configured to divide an angle space for receiving signals into multiple mutually orthogonal angle subspaces according to the AOAs range, wherein each of the angle subspaces corresponds to one of the user groups; and

user group determination submodule (532) configured to determine which of the user groups a user belongs to, according to the angle subspace which said user belongs to.

11. The device of claim 8, wherein, said resource allocating module comprising:

establishing submodule (541) configured to establish a mapping relation between each of the user groups and its respective priority sequence for selecting time-frequency resource-blocks among the resource subsets; and

allocating submodule (542) configured to allocate time-frequency resource-blocks to each user according to the one of the user groups that the user belongs to and said mapping relation, when scheduling each subframe.

12. The device of claim 11, wherein, establishing submodule is further configured to establish the mapping relation between each of the user groups and its respective priority sequence for selecting time-frequency resource-blocks among the resource subsets is performed according to the following principle:

for one of the user groups, selecting one of the resource subsets with the highest priority in the priority sequence for selecting time-frequency resource-blocks among the resource subsets, wherein the resource subsets with the highest priority in the priority sequences corresponding to different user groups are different.

13. The device of any of claim 8-12, further comprising :

communication module configured to send an update information to the neighbor cells, when any of information on user groups in a home cell, information on resource subsets in the home cell, and the mapping relation between each of the user groups and its respective priority sequence is changed,

wherein the updating module is configured to adjust any one or more of the information on user groups of the home cell, the information on resource subsets of the home cell, and the mapping relation between each of the user groups and its respective priority sequence, according to said update information, after receiving the update information of the neighbor cells.

14. The device of claim 8, wherein, said time-frequency resource-blocks are a part of entire time-frequency resource-blocks of said cell, said users to be scheduled are cell-edge users of said cell; said device further comprising:

cell-edge user differentiation module (505), configured to differentiate cell-center users from cell-edge users, according to Reference Signal Receiving Power, or Pilot Signal Strength, or Reference Signal Receiving Quality, or pilot signal Channel Quality Indicator CQI, or detected path loss information, or Signal to Interference plus Noise Ratio SINR information of each user in said cell;

wherein said user grouping module (503) is configured to group cell-edge users to be scheduled in the cell into multiple user groups according to the AOAs range.

**Patentansprüche**

1.  Verfahren zur Koordination von Interferenz, das Verfahren weist dabei die folgenden Schritte auf:

    - Erhalten (201) von Zeit-Frequenz-Ressourcenblöcken einer Zelle und Teilen der erhaltenen Zeit-Frequenz-Ressourcenblöcke in mehrere Ressourcen-Teilmengen;
    - Gruppieren (202) von in der Zelle zu planenden Benutzern in mehrere Benutzergruppen gemäß Bereichen von Ankunftswinkeln, AOA, von Wellen der Benutzer, wobei eine Menge der Benutzergruppen gleich einer Menge der Ressourcenuntergruppen ist und unterschiedliche Benutzergruppen unterschiedliche Prioritätssequenzen aufweisen zum Auswählen von Zeit-Frequenz-Ressourcenblöcken unter den Ressourcenuntergruppen;
    - Erhalten von Informationen über Ressourcenteilmengen, Informationen über Benutzergruppen, wobei die besagten Informationen über Benutzergruppen die AOA Bereiche umfassen, und Informationen über die Auswahl von Prioritätssequenzen der Nachbarzellen, welche jeder der Benutzergruppen entsprechen; und
    - Zuweisen (203) von Zeit-Frequenz-Ressourcenblöcken der Ressourcenteilmengen an Benutzer, sodass diejenigen Benutzer, die in Nachbarzellen eingeordnet ist, zu unterschiedlichen Benutzergruppen gehören und die Zuordnung entsprechend vorgenommen wird, gemäß den Prioritätssequenzen der Benutzergruppen.

2.  Verfahren nach Anspruch 1, wobei das Teilen der Zeit-Frequenz-Ressourcenblöcke in mehrere Ressourcenuntergruppen umfasst:

    für Downlink-Zeit-Frequenz-Ressourcen Blöcke, Unterteilen der Downlink-Zeit-Frequenz-Ressourcen Blöcke durch Verwenden von einem oder mehreren kontinuierlichen physikalischen Ressourcen Blöcke PRB als eine minimale Einheit; und
    für Uplink-Zeit-Frequenz-Ressourcen Blöcke, die kontinuierliche Zeit-Frequenz-Ressourcen Blöcke gemäß einem Prinzip der gegenseitigen Orthogonalität aufteilen.

3.  Verfahren nach Anspruch 1, wobei das Gruppieren von Benutzern, die in der Zelle geplant werden sollen, in mehrere Benutzergruppen Bereiche von Ankunftswinkeln, AOA, von Wellen der Benutzer umfasst, umfassend:

    Teilen eines Winkelraums zum Empfangen von Signalen in mehrere zueinander orthogonale Winkelunterräume gemäß den Bereichen von Ankunftswinkeln, wobei jeder der Winkelunterräume einer der Benutzergruppen entspricht; und
    Bestimmen einer Benutzergruppe, zu der ein Benutzer gehört, gemäß dem Winkelteilbereich, zu dem der Benutzer gehört.

4.  Verfahren nach Anspruch 1, wobei das Zuweisen der Zeitfrequenz-Ressourcenblöcke der Ressourcenteilmengen zu Benutzern derart erfolgt, dass Benutzer, die sich in Nachbarstandorten befinden, zu unterschiedlichen Gruppen gehören und die Zuweisung gemäß den Prioritätssequenzen der Benutzergruppen geplant ist, umfasst:

    Einrichten einer Abbildungsbeziehung zwischen jeder der Benutzergruppen und ihrer jeweiligen Prioritätssequenz zum Auswählen von Zeit-Frequenz-Ressourcenblöcken unter den Ressourcenteilmengen im Voraus; und
    Zuweisen der Zeit-Frequenz-Ressourcenblöcke an jeden Benutzer gemäß einer Benutzergruppe, zu der der Benutzer gehört, und der Zuordnungsbeziehung, wenn jede Zelle jeden Unterrahmen plant.

5.  Verfahren nach Anspruch 4, wobei das Einrichten einer Abbildungsbeziehung zwischen jeder der Benutzergruppen und ihrer jeweiligen Prioritätssequenz zum Auswählen von Zeit-Frequenz-Ressourcenblöcken zwischen den Ressourcenteilsätzen gemäß dem folgenden Prinzip durchgeführt wird:

    für eine der Benutzergruppen Auswählen eines der Ressourcenteilsätze mit der höchsten Priorität in der Prioritätssequenz zum Auswählen von Zeit-Frequenz-Ressourcenblöcken unter den Ressourcenteilsätzen, wobei die Ressourcenteilsätze mit der höchsten Priorität in den Prioritätssequenzen verschiedenen Benutzergruppen entsprechen sind anders.

6. Verfahren nach einem der Ansprüche 1 bis 5, ferner umfassend:

wenn Information über Benutzergruppen in einer Heimzelle, Information über Ressourcenteilmengen in einer Heimzelle und die Abbildungsbeziehung zwischen jeder der Benutzergruppen und ihrer jeweiligen Prioritätssequenz zum Auswählen von Zeit-Frequenz-Ressourcenblöcken unter den Ressourcenteilmengen geändert wird Senden einer Aktualisierungsinformation an benachbarte Zellen; und
nach dem Empfangen der Aktualisierungsinformation von Nachbarzellen, gemäß der Aktualisierungsinformation, Anpassen irgendeiner oder mehrerer der Information über Benutzergruppen in der Heimzelle, der Information von Ressourcenteilsätzen in der Heimzelle und der Abbildungsbeziehung zwischen jedem von dem Benutzer Gruppen und ihre jeweilige Prioritätsreihenfolge.

7. Verfahren nach Anspruch 1, wobei die Zeit-Frequenz-Ressourcenblöcke ein Teil der gesamten Zeit-Frequenz-Ressourcenblöcke der Zelle sind und die zu planenden Benutzer Zellkantenbenutzer der Zelle sind; wobei das Verfahren ferner umfasst:

entsprechend der Referenzsignalempfangsleistung oder Pilotsignalstärke oder Referenzsignalempfangsqualität oder Pilotsignalkanalqualitätsindikator CQI oder detektierter Pfadverlustinformation oder Signal zu Interferenz plus Rauschverhältnis SINR-Information jedes Benutzers in der Zelle, Differenzierungszelle -Zentrieren von Benutzern von Zellenrandbenutzern.

8. Zugangsnetzwerkgerät, welches Folgendes aufweist:

ein Ressourcengewinnungsmodul (501), welches ausgebildet ist zum Erhalten von Zeit-Frequenz-Ressourcenblöcken einer Zelle;
ein Ressourcenaufteilungsmodul (502), welches ausgebildet ist zum Aufteilen der Zeit-Frequenz-Ressourcenblöcke in mehrere Ressourcenuntermengen;
ein Benutzergruppierungsmodul (503), welches ausgebildet ist zum Gruppieren von in der Zelle zu planenden Benutzern in mehrere Benutzergruppen gemäß Bereichen von Ankunftswinkeln, AOA, von Wellen der Benutzer, wobei eine Menge der Benutzergruppen gleich einer Menge der Ressourcenuntermengen ist und unterschiedlich Benutzergruppen haben unterschiedliche Prioritätssequenzen zum Auswählen von Zeit-Frequenz-Ressourcenblöcken unter den Ressourcenuntergruppen;
ein Aktualisierungsmodul, welches ausgebildet ist zum Erhalten von Informationen über Ressourcenteilmengen, Informationen über Benutzergruppen und Informationen über Prioritätssequenzen der Nachbarzellen; und
ein Ressourcenzuordnungsmodul (504), welches ausgebildet ist zum Zuordnen von Zeit-Frequenz-Ressourcen Blöcken in den Ressourcenteilmengen an Benutzer, sodass diejenigen Benutzer, die in Nachbarzellen eingeordnet ist, zu unterschiedlichen Benutzergruppen gehören und die Zuordnung entsprechend vorgenommen wird, gemäß den Prioritätssequenzen der Benutzergruppen.

9. Vorrichtung nach Anspruch 8, wobei das Ressourcengruppierungsmodul speziell verwendet wird für:

für Downlink-Zeit-Frequenz-Ressourcen Blöcke, Unterteilen der Downlink-Zeit-Frequenz-Ressourcen Blöcke durch Verwenden von einem oder mehreren kontinuierlichen physikalischen Ressourcenblöcken PRB als eine minimale Einheit; und
für Uplink-Zeit-Frequenz-Ressourcen Blöcke, die kontinuierliche Zeit-Frequenz-Ressourcen Blöcke gemäß einem Prinzip der gegenseitigen Orthogonalität aufteilen.

10. Vorrichtung nach Anspruch 8, wobei das Benutzergruppierungsmodul umfasst:

- ein Raumteilungs-Submodul (531), welches ausgebildet ist zum Teilen eines Winkelraums zum Empfangen von Signalen in mehrere zueinander orthogonale Winkelunterräume gemäß den AOAs, wobei jeder der Winkelunterräume einer der Benutzergruppen entspricht; und
- ein Benutzergruppen-Ermittlungs-Submodul (532), welches ausgebildet ist zum Bestimmen, zu welcher der Benutzergruppen ein Benutzer gehört, gemäß dem Winkel-Unterraum, zu dem der Benutzer gehört.

11. Vorrichtung nach Anspruch 8, wobei das Ressourcenzuweisungsmodul umfasst:

- ein Einrichtungs-Submodul (541), welches ausgebildet ist zum Einrichten einer Abbildungsbeziehung zwischen jeder der Benutzergruppen und ihrer jeweiligen Prioritätssequenz zum Auswählen von Zeit-Frequenz-Ressourcenblöcken unter den Ressourcenuntergruppen; und

- ein Zuweisungs-Submodul (542), welches ausgebildet ist zum Zuordnen von Zeit-Frequenz-Ressourcenblöcken zu jedem Benutzer gemäß der einen der Benutzergruppen, zu denen der Benutzer gehört, und der Abbildungsbeziehung, wenn jeder Unterübertragungsrahmen geplant wird.

**12.** Vorrichtung nach Anspruch 11, wobei das Einrichtungs-Submoduls (541) ferner ausgebildet ist zum Einrichten der Abbildungsbeziehung zwischen jeder der Benutzergruppen und ihre jeweilige Prioritätssequenz zum Auswählen von Zeit-Frequenz-Ressourcenblöcken zwischen den Ressourcenteilsätzen gemäß dem folgenden Prinzip:

für eine der Benutzergruppen Auswählen eines der Ressourcenteilsätze mit der höchsten Priorität in der Prioritätssequenz zum Auswählen von Zeit-Frequenz-Ressourcenblöcken unter den Ressourcenteilmengen, wobei die Ressourcenteilmengen mit der höchsten Priorität in den Prioritätssequenzen in Entsprechung zu unterschiedlichen Benutzergruppen anders sind.

**13.** Vorrichtung nach einem der Ansprüche 8-12, weiterhin umfassend:

ein Kommunikationsmodul, welches ausgebildet ist zum Senden einer Aktualisierungsinformation an die Nachbarzellen, wenn irgendeine Information über Benutzergruppen in einer Heimzelle, Information über Ressourcenteilmengen in der Heimzelle und die Abbildungsbeziehung zwischen jeder der Benutzergruppen und ihrer jeweiligen Prioritätssequenz geändert wird;
wobei das Aktualisierungsmodul ausgebildet ist, eine oder mehrere der Informationen über Benutzergruppen der Heimzelle, die Information über Ressourcenteilmengen der Heimzelle und die Abbildungsbeziehung zwischen jeder der Benutzergruppen und ihrer jeweiligen Prioritätssequenz einzustellen gemäß der Aktualisierungsinformation nach dem Empfang der Aktualisierungsinformation der Nachbarzellen.

**14.** Vorrichtung nach Anspruch 8, wobei die Zeit-Frequenz-Ressourcenblöcke einen Teil der gesamten Zeit-Frequenz-Ressourcenblöcke der Zelle sind, wobei die zu planenden Benutzer Zellkantenbenutzer der Zelle sind; wobei die Vorrichtung ferner umfasst:

Zellkanten-Benutzerdifferenzierungsmodul (505), welches ausgebildet ist zum Unterscheiden von Zellzentralnutzern von Zellkantennutzern gemäß Referenzsignalempfangsleistung oder Pilotsignalstärke oder Referenzsignalempfangsqualität oder Pilotsignalkanalqualitätsindikator, CQI, oder detektierter Pfadverlust-Information oder Signal-zu-Interferenz-plus-RauschVerhältnis-SINR-Information von jedem Benutzer in der Zelle;
wobei das Benutzergruppierungsmodul (503) ausgebildet ist Zellenrandbenutzer, die in der Zelle eingeplant werden sollen, in mehrere Benutzergruppen gemäß den Bereichen von Ankunftswinkeln, AOAs, zu gruppieren.

## Revendications

**1.** Procédé de coordination de brouillage, le procédé comprenant de :

obtenir (201) des blocs de ressources temps-fréquence d'une cellule, et diviser lesdits blocs de ressources temps-fréquence en de multiples sous-ensembles de ressources ;
grouper (202) des utilisateurs à programmer dans la cellule en de multiples groupes d'utilisateurs en fonction de plages d'angles d'arrivée, AOA, des utilisateurs,
dans lequel une quantité desdits groupes d'utilisateurs est égale à une quantité desdits sous-ensembles de ressources, et différents groupes d'utilisateurs ont des séquences de priorité différentes pour sélectionner des blocs de ressources temps-fréquence parmi les sous-ensembles de ressources ;
obtenir des informations sur des sous-ensembles de ressources, des informations sur des groupes d'utilisateurs, lesdites informations de groupes d'utilisateurs comprenant des plages d'AOA, et des informations sur des séquences de priorité de sélection correspondant à chaque groupe d'utilisateurs des cellules voisines ; et
allouer (203) des blocs de ressources temps-fréquence des sous-ensembles de ressources à des utilisateurs, de sorte que des utilisateurs qui se trouvent dans des emplacements voisins appartiennent à des groupes d'utilisateurs différents et l'allocation est programmée en fonction desdites séquences de priorité des groupes d'utilisateurs.

**2.** Procédé selon la revendication 1, dans lequel, ladite division desdits blocs de ressources temps-fréquence en de multiples sous-ensembles de ressources, comprenant de :

pour des blocs de ressources temps-fréquence de liaison descendante, diviser les blocs de ressources temps-fréquence de liaison descendante en utilisant un ou plusieurs blocs de ressources physiques, PRB, continus comme unité minimale ; et
pour des blocs de ressources temps-fréquence de liaison montante, diviser des blocs de ressources temps-fréquence continus selon un principe d'orthogonalité mutuelle.

**3.** Procédé selon la revendication 1, dans lequel ledit groupement d'utilisateurs à programmer dans la cellule en de multiples groupes d'utilisateurs selon les plages d'angles d'arrivée, AOA, des utilisateurs, comprenant de :

diviser un espace d'angle pour recevoir des signaux en de multiples sous-espaces d'angle mutuellement orthogonaux selon les plages d'AOA,
dans lequel chacun des sous-espaces d'angle correspond à l'un des groupes d'utilisateurs ; et déterminer un groupe d'utilisateurs auquel appartient un utilisateur en fonction du sous-espace d'angle auquel appartient cet utilisateur.

**4.** Procédé selon la revendication 1, dans lequel ladite allocation des blocs de ressources temps-fréquence des sous-ensembles de ressources à des utilisateurs, de sorte que des utilisateurs qui sont dans des emplacements voisins appartiennent à des groupes différents et l'allocation est programmée selon lesdites séquences de priorité des groupes d'utilisateurs, comprenant de :

établir à l'avance une relation de mappage entre chacun des groupes d'utilisateurs et sa séquence de priorité respective pour sélectionner des blocs de ressources temps-fréquence parmi les sous-ensembles de ressources ; et
allouer les blocs de ressources temps-fréquence à chaque utilisateur en fonction d'un groupe d'utilisateurs auquel appartient l'utilisateur et de ladite relation de mappage, lorsque chaque cellule programme chaque sous-trame.

**5.** Procédé selon la revendication 4, dans lequel l'établissement d'une relation de mappage entre chacun des groupes d'utilisateurs et sa séquence de priorité respective pour sélectionner des blocs de ressources temps-fréquence parmi les sous-ensembles de ressources est effectué selon le principe suivant :

pour l'un des groupes d'utilisateurs, sélectionner l'un des sous-ensembles de ressources ayant la priorité la plus élevée dans la séquence de priorité pour sélectionner des blocs de ressources temps-fréquence parmi les sous-ensembles de ressources, dans lequel les sous-ensembles de ressources ayant la priorité la plus élevée dans les séquences de priorité correspondant à différents groupes d'utilisateurs sont différents.

**6.** Procédé selon l'une quelconque des revendications 1 à 5, comprenant en outre de :

lorsque l'un quelconque parmi des informations sur des groupes d'utilisateurs dans une cellule résidentielle, des informations sur des sous-ensembles de ressources dans une cellule résidentielle, et la relation de mappage entre chacun des groupes d'utilisateurs et sa séquence de priorité respective pour sélectionner des blocs de ressources temps-fréquence parmi les sous-ensembles de ressources est modifié, envoyer des informations de mise à jour à des cellules voisines ; et
après avoir reçu les informations de mise à jour de cellules voisines, selon lesdites informations de mise à jour, ajuster l'un quelconque ou plusieurs parmi les informations sur des groupes d'utilisateurs dans la cellule résidentielle, les informations de sous-ensembles de ressources dans la cellule résidentielle, et la relation de mappage entre chacun des groupes d'utilisateurs et sa séquence de priorité respective.

**7.** Procédé selon la revendication 1, dans lequel lesdits blocs de ressources temps-fréquence font partie de blocs de ressources temps-fréquence entiers de ladite cellule, et lesdits utilisateurs à programmer sont des utilisateurs de bord de cellule de ladite cellule ; ledit procédé comprenant en outre de :

en fonction de la puissance de réception du signal de référence, ou de l'intensité du signal pilote, ou de la qualité de réception du signal de référence, ou de l'indicateur de qualité de canal, CQI, du signal pilote, ou d'informations d'affaiblissement le long du trajet détecté, ou d'informations du rapport signal sur brouillage plus bruit, SINR, de chaque utilisateur dans ladite cellule, différencier des utilisateurs de centre de cellule d'utilisateurs de bord de cellule.

8. Dispositif de réseau d'accès comprenant :

un module d'obtention de ressources (501) configuré pour obtenir des blocs de ressources temps-fréquence d'une cellule ;
un module de division de ressources (502) configuré pour diviser lesdits blocs de ressources temps-fréquence en de multiples sous-ensembles de ressources ;
un module de groupement d'utilisateurs (503) configuré pour grouper des utilisateurs à programmer dans la cellule en de multiples groupes d'utilisateurs selon la plage d'angles d'arrivée, AOA, des utilisateurs, dans lequel une quantité desdits groupes d'utilisateurs est égale à une quantité desdits sous-ensembles de ressources, et différents groupes d'utilisateurs ont différentes séquences de priorité pour sélectionner des blocs de ressources temps-fréquence parmi les sous-ensembles de ressources ;
un module de mise à jour configuré pour obtenir des informations sur des sous-ensembles de ressources, des informations sur des groupes d'utilisateurs, lesdites informations de groupes d'utilisateurs comprenant des plages d'AOA, et des informations sur des séquences de priorité de sélection correspondant à chaque groupe d'utilisateurs des cellules voisines ; et
un module d'allocation de ressources (504) configuré pour allouer des blocs de ressources temps-fréquence des sous-ensembles de ressources à des utilisateurs, de sorte que des utilisateurs qui sont situés dans des emplacements voisins appartiennent à des groupes d'utilisateurs différents, et l'allocation est programmée selon lesdites séquences de priorité des groupes d'utilisateurs.

9. Dispositif selon la revendication 8, dans lequel ledit module de groupement de ressources est spécifiquement utilisé pour :

pour des blocs de ressources temps-fréquence de liaison descendante, diviser les blocs de ressources temps-fréquence de liaison descendante en utilisant un ou plusieurs blocs de ressources physiques, PRB, continus comme unité minimale ;
et pour des blocs de ressources temps-fréquence de liaison montante, diviser des blocs de ressources temps-fréquence continus selon un principe d'orthogonalité mutuelle.

10. Dispositif selon la revendication 8, dans lequel ledit module de groupement d'utilisateurs comprenant :

un sous-module de division d'espace (531) configuré pour diviser un espace d'angle pour recevoir des signaux en de multiples sous-espaces d'angle mutuellement orthogonaux selon la plage d'AOA, dans lequel chacun des sous-espaces d'angle correspond à l'un des groupes d'utilisateurs ; et
un sous-module de détermination de groupe d'utilisateurs (532) configuré pour déterminer à quels groupes d'utilisateurs appartient un utilisateur, en fonction du sous-espace d'angle auquel appartient cet utilisateur.

11. Dispositif selon la revendication 8, dans lequel ledit module d'allocation de ressources comprenant :

un sous-module d'établissement (541) configuré pour établir une relation de mappage entre chacun des groupes d'utilisateurs et sa séquence de priorité respective pour sélectionner des blocs de ressources temps-fréquence parmi les sous-ensembles de ressources ; et
un sous-module d'allocation (542) configuré pour allouer des blocs de ressources temps-fréquence à chaque utilisateur en fonction de l'un des groupes d'utilisateurs auxquels appartient l'utilisateur et de ladite relation de mappage, lors de la programmation de chaque sous-trame.

12. Dispositif selon la revendication 11, dans lequel le sous-module d'établissement est en outre configuré pour établir la relation de mappage entre chacun des groupes d'utilisateurs et sa séquence de priorité respective pour sélectionner des blocs de ressources temps-fréquence parmi les sous-ensembles de ressources selon le principe suivant :

pour l'un des groupes d'utilisateurs, sélectionner l'un des sous-ensembles de ressources ayant la priorité la plus élevée pour sélectionner des blocs de ressources temps-fréquence parmi les sous-ensembles de ressources, dans lequel les sous-ensembles de ressources ayant la priorité la plus élevée dans les séquences de priorité correspondant à des groupes d'utilisateurs différents sont différents.

**13.** Dispositif selon l'une quelconque des revendications 8 à 12, comprenant en outre :

un module de communication configuré pour envoyer des informations de mise à jour aux cellules voisines, lorsque l'un quelconque parmi des informations sur des groupes d'utilisateurs dans une cellule résidentielle, des informations sur des sous-ensembles de ressources dans la cellule résidentielle, et la relation de mappage entre chacun des groupes d'utilisateurs et sa séquence de priorité respective est modifié, dans lequel le module de mise à jour est configuré pour ajuster l'un quelconque ou plusieurs parmi les informations sur des groupes d'utilisateurs de la cellule résidentielle, les informations sur des sous-ensembles de ressources de la cellule résidentielle, et la relation de mappage entre chacun des groupes d'utilisateurs et sa séquence de priorité respective, en fonction desdites informations de mise à jour, après avoir reçu les informations de mise à jour des cellules voisines.

**14.** Dispositif selon la revendication 8, dans lequel lesdits blocs de ressources temps-fréquence font partie de blocs de ressources temps-fréquence entiers de ladite cellule, lesdits utilisateurs à programmer sont des utilisateurs de bord de cellule de ladite cellule ; ledit dispositif comprenant en outre :

un module de différentiation d'utilisateurs de bord de cellule (505), configuré pour différencier des utilisateurs de centre de cellule d'utilisateurs de bord de cellule, selon la puissance de réception du signal de référence, ou la force du signal pilote, ou la qualité de réception du signal de référence, ou l'indicateur de qualité de canal, CQI, du signal pilote, ou des informations d'affaiblissement le long du trajet détecté, ou des informations de rapport signal sur brouillage plus bruit, SINR, de chaque utilisateur dans ladite cellule ; dans lequel ledit module de groupement d'utilisateurs (503) est configuré pour grouper des utilisateurs de bord de cellule à programmer dans la cellule dans de multiples groupes d'utilisateurs selon la plage d'AOA.

Frame, $T_f = 307200T_s = 10$ ms

Half Frame, $153600T_s = 5$ ms

*Slot*
$T_{slot} = 15360T_s$   $30720T_s$

| Slot #0 | | | | Slot #2 | Slot #3 | Slot #4 | Slot #5 | | | | Slot #7 | Slot #8 | Slot #9 |

$30720T_s$

DwPTS   GP   UpPTS                    DwPTS   GP   UpPTS

FIG. 1

getting time-frequency resources of cell, and dividing said time-frequency resources into multiple resource subsets

201

grouping users to be scheduled in the cell into multiple user groups according to Angles of Arrival of waves of the users, wherein an amount of said user groups is equal to an amount of said resource subsets, and different user groups have different priority sequences for selecting time-frequency resources among the resource subsets

202

allocating time-frequency resources in one of the resource subsets to users, which are in neighboring cells and have the same direction, according to said priority sequences of the user groups

203

FIG. 2

FIG. 3

FIG. 4

501

resource getting
module

502

resource dividing
module

504

resource allocating module

541

establishing
submodule

542

allocating
submodule

503

user grouping module

531

space dividing
submodule

532

user group determination
submodule

505

cell-edge user
differentation module

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1453337 A1
- WO 2005101987 A2